# EUROPÄISCHE PATENTANMELDUNG

(11) **EP 2 226 752 A1**
(43) Veröffentlichungstag der Anmeldung: **08.09.2010**
(21) Anmeldenummer: 09003042.0
(22) Anmeldetag: 03.03.2009
(51) Int. Cl.: G06Q 10/00

(54) **Verfahren zur rechnergestützten Visualisierung des Risikostatus in einem technischen Projekt**

(71) Anmelder: Siemens Aktiengesellschaft, 80333 München (DE)
(72) Erfinder: Görisch, Andre, Dr., 90768 Fürth (DE); Mäckel, Oliver, 85551 Heimstetten (DE); Rüther, Björn, 44135 Dortmund (DE); Sturm, Alexander, 45470 Mülheim an der Ruhr (DE)

(57) **Zusammenfassung**

Die Erfindung betrifft ein Verfahren zur rechnergestützten Visualisierung des Risikostatus in einem Projekt zur Entwicklung oder Herstellung eines technischen Systems oder technischer Komponenten oder eines technischen Prozesses. Bei dem erfindungsgemäßen Verfahren werden als erste Eingangsgrößen eine Anzahl von Risiken und/oder als zweite Eingangsgrößen eine Anzahl von Unsicherheiten bereitgestellt, wobei jedem Risiko eine Eintrittswahrscheinlichkeit und ein Schadensmaß bei Eintritt des Risikos zugeordnet ist und jeder Unsicherheit eine Gewichtung und eine Schadensschätzung bei Eintritt der Unsicherheit zugeordnet ist. Des Weiteren wird basierend auf den ersten und/oder zweiten Eingangsgrößen ein Balkendiagram mit einem ersten Sektor (S1) für die ersten Eingangsgrößen und einem zweiten Sektor (S2) für die zweiten Eingangsgrößen generiert, wobei der erste und/oder zweite Sektor (S1, S2) visuell unterscheidbar sind. Der erste Sektor (S1) umfasst für jedes Risiko der Anzahl von Risiken ein Balkensegment (BS), in dem mittels Balken (B1, B2) die Größe der Eintrittswahrscheinlichkeit und die Größe des Schadensmaßes des jeweiligen Risikos visuell unterscheidbar wiedergegeben sind, und der zweite Sektor (S2) umfasst für jede Unsicherheit der Anzahl von Unsicherheiten ein Balkensegment (BS), in dem mittels Balken (B3, B4) die Größe der Gewichtung und die Größe der Schadensschätzung visuell unterscheidbar wiedergegeben sind. Die erfindungsgemäße Darstellung erfolgt dabei vorzugsweise in der Form eines kreisförmigen Balkendiagramms, wobei die entsprechenden Balken für die Risiken bzw. Unsicherheiten in unterschiedlichen Farben hervorgehoben werden. Erfindungsgemäß wird eine intuitiv schnell erfassbare Darstellung der Risiken und Unsicherheiten in einem technischen Projekt erreicht.

## Beschreibung

Die Erfindung betrifft ein Verfahren zur rechnergestützten Visualisierung des Risikostatus in einem technischen Projekt zur Entwicklung oder Herstellung eines technischen Systems oder technischer Komponenten oder eines technischen Prozesses.

Die Analyse von Risiken ist für die Steuerung und Bewertung von Projekten bzw. zur Fertigung von technischen Produkten bzw. technischen Anlagen von entscheidender Bedeutung. Im Rahmen einer Risikoanalyse eines technischen Projekts fallen dabei eine hohe Anzahl von qualitativ und quantitativ bewerteten Risken an, die eine geeignete aussagekräftige Visualisierung erfordern.

Aus der Druckschrift US 2007/0255583 A1 ist ein Verfahren zur Risikoanalyse bekannt, bei dem qualitative und quantitative Bewertungen von Risiken basierend auf Diagrammen visualisiert werden, um hierdurch insbesondere unplausible Risiken mit hoher Diskrepanz zwischen qualitativer und quantitativer Bewertung zu identifizieren.

In herkömmlichen Risikoanalyse-Verfahren werden hauptsächlich Risiken im eigentlichen Sinne betrachtet, welche kalkulierbare Unsicherheiten darstellen, die in geeigneter Weise durch eine Eintrittswahrscheinlichkeit und eine Schadenshöhe bei Eintritt des Risikos spezifiziert werden. Hier und im Folgenden wird der Begriff "Risiko" auch in dem Sinne verwendet, dass er eine kalkulierbare Unsicherheit darstellt. Nichtsdestotrotz existieren insbesondere in frühen Phasen eines technischen Projekts auch Risiken im weiteren Sinne, welche nicht kalkulierbar sind. Solche Risiken werden hier und im Folgenden als Unsicherheiten bezeichnet. Für Risikoanalyse-Verfahren, welche auch solche Unsicherheiten in die Analyse einbeziehen, ist es wünschenswert, sowohl die kalkulierbaren Risiken als auch die Unsicherheiten in geeigneter Weise zu visualisieren.

Aufgabe der Erfindung ist es, ein Verfahren zur rechnergestützten Visualisierung des Risikostatus in einem technischen Projekt zu schaffen, mit dem einem Betrachter einfach und intuitiv der Risikostatus unter Einbeziehung von Risiken und Unsicherheiten vermittelt wird.

Diese Aufgabe wird durch das Verfahren gemäß Patentanspruch 1 bzw. das Computerprogrammprodukt gemäß Patentanspruch 27 gelöst. Weiterbildungen der Erfindung sind in den abhängigen Ansprüchen definiert.

In dem erfindungsgemäßen Verfahren werden als erste Eingangsgrößen eine Anzahl von Risiken und/oder als zweite Eingangsgrößen eine Anzahl von Unsicherheiten bereitgestellt, wobei jedem Risiko eine Eintrittswahrscheinlichkeit und ein Schadensmaß bei Eintritt des Risikos zugeordnet ist und jeder Unsicherheit eine Gewichtung und eine Schadensschätzung bei Eintritt der Unsicherheit zugeordnet ist. Das Schadensmaß eines Risikos ist vorzugsweise der monetäre Schaden. Die Schadensschätzung für eine Unsicherheit stellt eine grobe Bewertung des Schadens dar, wobei die Größe der Schadensschätzung vorzugsweise auch eine monetäre Größe ist. Die Gewichtung einer Unsicherheit stellt ein Maß für die Relevanz der Unsicherheit dar, d.h. je höher die Gewichtung ist, desto höher ist die Bedeutung der entsprechenden Unsicherheit für den Risikostatus des Projekts. Durch die obige Und/oder-Verknüpfung wird zum Ausdruck gebracht, dass gegebenenfalls auch der Fall auftreten kann, dass in einem Projekt nur Risiken bzw. nur Unsicherheiten vorliegen, so dass nur eine der Eignungsgrößen bereitgestellt und gemäß den nachfolgenden Schritten visualisiert wird. Die Bereitstellung der ersten bzw. zweiten Eingangsgrößen erfolgt vorzugsweise durch Einlesen der entsprechenden Eingangsgrößen aus einem Speicher, z.B. einer Tabelle. Die Eingangsgrößen bzw. von den Eingangsgrößen abhängige Größen, aus denen die Eingangsgrößen bestimmbar sind, werden in der Regel durch am Projekt beteiligte Personen, beispielsweise im Rahmen von Workshops, festgelegt.

In dem erfindungsgemäßen Verfahren wird basierend auf den ersten und/oder zweiten Eingangsgrößen ein Balkendiagramm mit einem ersten Sektor für die ersten Eingangsgrößen und/oder einem zweiten Sektor für die zweiten Eingangsgrößen generiert, wobei der erste und zweite Sektor, sofern beide vorhanden sind, visuell unterscheidbar sind. Hierdurch wird bereits eine geeignete visuelle Unterscheidung zwischen Risiken und Unsicherheiten getroffen. Ein Betrachter erkennt dabei, wie unsicherheitsbehaftet das Projekt ist. Insbesondere im Falle, dass eine Vielzahl von Unsicherheiten im Vergleich zu einer geringen Anzahl von Risken vorliegt, wird intuitiv vermittelt, dass noch weitere Informationen in Bezug auf die Spezifikation des Projekts benötigt werden, um den Risikostatus genauer bestimmen zu können.

In der erfindungsgemäßen Darstellung umfasst der erste Sektor (sofern vorhanden) für jedes Risiko der Anzahl von Risken ein Balkensegment, in dem mittels Balken die Größe der Eintrittswahrscheinlichkeit und die Größe des Schadensmaßes des jeweiligen Risikos visuell unterscheidbar wiedergegeben sind. Hierdurch erhält ein Betrachter schnell erfassbare detaillierte Informationen über die Einstufung eines Risikos. Analog zum ersten Sektor umfasst der zweite Sektor (sofern vorhanden) für jede Unsicherheit der Anzahl von Unsicherheiten ein Balkensegment, in dem mittels Balken die Größe der Gewichtung und die Größe der Schadensschätzung visuell unterscheidbar wiedergegeben sind.

Mit dem erfindungsgemäßen Verfahren wird eine leicht verständliche und schnell erfassbare Wiedergabe des Risikostatus basierend auf Risiken und auf Unsicherheiten geschaffen. Durch entsprechende visuelle Unterscheidung, welche beispielsweise durch verschiedene Farbgebungen der Balken erreicht werden kann, werden dem Betrachter durch ein einziges Diagramm ferner auch Detailinformationen zu dem Projekt vermittelt.

Zur Quantifizierung einer Unsicherheit wird in einer Ausführungsform des erfindungsgemäßen Verfahrens diese Unsicherheit basierend auf einem Vorhersagbarkeitsmaß und einem Beeinflussbarkeitsmaß ermittelt. Das Vorhersagbarkeitsmaß und das Beeinflussbarkeitsmaß wurden dabei z.B. durch am Projekt beteiligte Personen bestimmt. Der Schritt des Bereitstellens der zweiten Eingangsdaten umfasst in dieser Ausführungsform das Einlesen entsprechender Vorhersagbarkeitsmaße und Beeinflussbarkeitsmaße in Kombination mit der Ermittlung einer Gewichtung. Die Gewichtung setzt sich dabei zusammen aus einer Unvorhersagbarkeit, welche eine zum Vorhersagbarkeitsmaß inverse Größe ist, und einer Unbeeinflussbarkeit, welche eine zum Beeinflussbarkeitsmaß inverse Größe ist. Mit dem Vorhersagbarkeitsmaß und Beeinflussbarkeitsmaß werden Größen geschaffen, mit denen auch nicht kalkulierbare Risiken in geeigneter Weise quantifiziert werden können. Das Vorhersagbarkeitsmaß gibt dabei wieder, wie gut Ursachen und Risikotreiber der entsprechend betrachteten Unsicherheit im Projekt bekannt sind. Das Beeinflussbarkeitsmaß gibt wieder, wie gut die betrachtete Unsicherheit durch die am Projekt beteiligten Personen und Institutionen beeinflusst werden kann.

In einer besonders bevorzugten Ausführungsform wird die Gewichtung einer jeweiligen Unsicherheit in dem entsprechenden Balkensegment durch einen Balken repräsentiert, der sich aus einem Balkenabschnitt für die Unbeeinflussbarkeit und einem Balkenabschnitt für die Unvorhersagbarkeit zusammensetzt, wobei die beiden Balkenabschnitte vorzugsweise visuell unterscheidbar sind. Hierdurch wird in geeigneter Weise eine Darstellung der Gewichtung generiert, bei der insbesondere auch Detailinformationen in Bezug auf die Zusammensetzung der Gewichtung ersichtlich sind.

In einer weiteren Ausgestaltung des erfindungsgemäßen Verfahrens repräsentiert in einem Balkensegment eines jeweiligen Risikos ein Balken in eine erste Richtung die Eintrittswahrscheinlichkeit und ein Balken in eine zweite, entgegengesetzte Richtung die Schadenshöhe. Auf diese Weise wird in einfacher Weise visuell vermittelt, welche Eintrittswahrscheinlichkeit und welche Schadenshöhe zu dem gleichen Risiko gehören. In einer weiteren Ausgestaltung des erfindungsgemäßen Verfahrens repräsentiert in einem Balkensegment einer jeweiligen Unsicherheit ein Balken in eine erste Richtung die Gewichtung und ein Balken in eine zweite, entgegengesetzte Richtung die Schadensschätzung. Auch in dieser Ausführungsform wird auf einfache Weise visuell vermittelt, welche Gewichtung und welche Schadensschätzung zu der gleichen Unsicherheit gehören.

In einer weiteren, besonders bevorzugten Ausführungsform des erfindungsgemäßen Verfahrens weisen solche Balken, welche Eintrittswahrscheinlichkeiten repräsentieren, eine erste Farbe auf. Ebenso weisen solche Balken, welche Schadenshöhen repräsentieren, eine zweite Farbe auf. Ferner weisen solche Balken, welche eine Gewichtung repräsentieren, eine dritte Farbe oder ein Paar von Farben umfassend eine vierte und eine fünfte Farbe auf. Dabei sind die erste bis dritte Farbe bzw. die erste bis fünfte Farbe unterschiedliche Farben. Hierdurch wird mittels entsprechender Farbcodierung vermittelt, welche Parameter die einzelnen Balken repräsentieren. Insbesondere wird auch eine Unterscheidung zwischen Risiken und Unsicherheiten erreicht. Mit Hilfe der Farbcodierung wird dabei dem Betrachter der Risikostatus derart visualisiert, dass ein stärker mit Farben gefülltes und insbesondere ein sehr buntes Bild mit einem stärker risikobehafteten Projekt korrespondiert.

In der Ausführungsform des erfindungsgemäßem Verfahrens, in der die Unvorhersagbarkeit und die Unbeeinflussbarkeit in einem entsprechenden Balken durch visuell unterscheidbare Balkenabschnitte wiedergegeben werden, weist der Balkenabschnitt für die Unvorhersagbarkeit die vierte Farbe auf und der Balkenabschnitt für die Unbeeinflussbarkeit die fünfte Farbe. Eine besonders leicht intuitiv erfassbare Darstellung des Risikostatus wird durch die Realisierung des Balkendiagramms als kreisförmiges Diagramm erreicht, wobei der erste Sektor (sofern vorhanden) ein erster Kreissektor und der zweite Sektor (sofern vorhanden) ein zweiter Kreissektor ist und für jedes Risiko und/oder jede Unsicherheit ein Balkensegment in der Form eines Balkenkreissegments vorgesehen ist. Zur Unterscheidung sind der erste und zweite Kreissektor vorzugsweise durch zwei Trennkreissegmente voneinander separiert.

In einer weiteren Ausgestaltung des erfindungsgemäßen Verfahrens umfasst das kreisförmige Diagramm einen visuell von den Balken unterscheidbaren Ring, der in jeweilige, den Balkenkreissegmenten zugeordnete Ringsegmente unterteilt ist.

In einer bevorzugten Ausführungsform der Erfindung ist für ein jeweiliges Ringsegment, welches einem ein Risiko repräsentierenden Balkenkreissegment zugeordnet ist, ein Balken für die Eintrittswahrscheinlichkeit und ein Balken für das Schadensmaß vorgesehen, wobei sich ausgehend von dem jeweiligen Ringsegment ein Balken in radialer Richtung des Diagramms nach außen und der andere Balken in radialer Richtung des Diagramms nach innen erstreckt. Dabei erstreckt sich vorzugsweise der Balken für die Eintrittswahrscheinlichkeit nach außen und der Balken für das Schadensmaß nach innen.

In einer weiteren Ausführungsform ist für ein jeweiliges Ringsegment, welches einem eine Unsicherheit repräsentierenden Balkenkreissegment zugeordnet ist, ein Balken für die Gewichtung und ein Balken für die Schadensschätzung vorgesehen, wobei sich ausgehend von dem jeweiligen Ringsegment ein Balken in radialer Richtung des kreisförmigen Diagramms nach außen und der andere Balken in radialer Richtung des kreisförmigen Diagramms nach innen erstreckt. Dabei erstreckt sich vorzugsweise der Balken für die Gewichtung nach außen und der Balken für die Schadensschätzung nach innen.

In einer weiteren Ausführungsform der Erfindung ist in einem jeweiligen Ringsegment eine Bewertung des dem Ringsegment zugeordneten Risikos oder der dem Ringsegment zugeordneten Unsicherheit visuell wiedergegeben, beispielsweise durch Grauabstufungen und/oder farbliche Abstufungen der Fläche des Ringsegments. Auf diese Weise werden weitere Informationen zu den bewerteten Risiken bzw. Unsicherheiten in dem kreisförmigen Balkendiagramm in geeigneter Weise dem Betrachter visuell vermittelt. Vorzugsweise stellen dabei die Bewertungen im Unterschied zu den quantitativen Größen der Eintrittswahrscheinlichkeit und der Schadenshöhe bzw. der Gewichtung und der Schadensschätzung qualitative Bewertungen der Risiken und/oder der Unsicherheiten dar. Bei diesen Bewertungen handelt es sich insbesondere um intuitive Abschätzungen der Risiken bzw. Unsicherheiten basierend auf Befragungen der am Projekt beteiligten Personen.

In einer weiteren Ausgestaltung des erfindungsgemäßen Verfahrens umfasst das Balkenkreisdiagramm für den ersten und/oder zweiten Kreissektor einen Außenring mit jeweiligen, den Balkenkreissegmenten zugeordneten Außenringsegmenten, wobei in den jeweiligen Außenringsegmenten eine quantitative Bewertung des Risikos oder der Unsicherheit basierend auf den Balken des entsprechenden Balkenkreissegments visualisiert ist, wobei die quantitative Bewertung vorzugsweise in mehrere Klassen eingeteilt ist und die jeweilige Klasse der Bewertung vorzugsweise durch die Farbe des jeweiligen Außenringsegments wiedergegeben ist. Hierdurch wird in geeigneter Weise eine quantitative Einstufung des entsprechenden Risikos bzw. der entsprechenden Unsicherheit visuell vermittelt. In Kombination mit der obigen Ausführungsform, bei der qualitative Bewertungen in Ringsegmenten angezeigt werden, können hierdurch in dem Diagramm unplausible Risiken mit einer großen Diskrepanz zwischen quantitativer und qualitativer Bewertung erkannt werden.

In einer weiteren Variante des erfindungsgemäßen Verfahrens ist der Hintergrund des dargestellten kreisförmigen Balkendiagramms dunkel und insbesondere schwarz, wobei sich die Balken von diesem Hintergrund durch ihre Farbgebung abheben. Hierdurch wird eine besonders gut visuell erfassbare Darstellung der Risiken bzw. Unsicherheiten erreicht.

In einer weiteren, bevorzugten Ausführungsform der Erfindung sind im Zentrum des Balkendiagramms Informationen zu dem technischen Projekt wiedergegeben, wie z.B. der Name des Projekts, die Anzahl der beurteilten Risiken bzw. Unsicherheiten und dergleichen.

In einer weiteren Variante der Erfindung ist in den Balken des Balkendiagramms eine Skala, insbesondere in der Form von umlaufenden Kreislinien, visualisiert. Vorzugsweise ist dabei für Balken, welche Schadensmaße oder Schadensschätzungen repräsentieren, eine logarithmische Skala visualisiert. Demgegenüber ist für Balken, welche Eintrittswahrscheinlichkeiten oder Gewichtungen repräsentieren, vorzugsweise eine lineare Skala visualisiert.

In einer weiteren, besonders bevorzugten Ausführungsform der Erfindung ist der Risikostatus nach einer Planung von Maßnahmen zur Verminderung des Projektrisikos durch das Balkendiagramm visualisiert, wobei die Risiken und/oder Unsicherheiten nach einer Durchführung der geplanten Maßnahmen durch jeweilige Balken visualisiert sind. Um einen Vergleich zwischen den Risiken vor und nach Durchführung der geplanten Maßnahmen zu ermöglichen, sind in einer weiteren Ausführungsform in dem Balkendiagramm ferner zumindest teilweise die Risiken und/oder Unsicherheiten vor der Durchführung der geplanten Maßnahmen visualisiert. Die Visualisierung erfolgt dabei vorzugsweise derart, dass die jeweiligen Balken mit zweiten Balken überlagert werden, welche jeweils die durch den jeweiligen Balken repräsentierte Größe vor der Durchführung der geplanten Maßnahmen wiedergeben, wobei von dem zweiten Balken der über den jeweiligen Balken hinausgehende Teil visuell unterscheidbar von dem jeweiligen Balken wiedergegeben ist. In Ausnahmefällen, in denen der zweite Balken, der entsprechende Größen vor der Durchführung der geplanten Maßnahmen wiedergibt, niedriger als der Balken nach Durchführung der Maßnahmen ist, werden die visuellen Wiedergaben der beiden Balken miteinander vertauscht, wodurch auf einfache Weise dem Betrachter vermittelt wird, dass der Ausnahmefall vorliegt, dass nach der Durchführung der geplanten Maßnahmen ein Risiko bzw. eine Unsicherheit größer wird.

In einer weiteren Ausgestaltung des erfindungsgemäßen Verfahrens sind in dem Balkendiagramm die Maßnahmenkosten der geplanten Maßnahmen visualisiert, beispielsweise durch entsprechende Marker für das jeweilige Risiko bzw. die jeweilige Unsicherheit, welches bzw. welche durch die Maßnahme vermindert werden soll, wobei die Marker insbesondere auf der entsprechenden Skala für die Schadenshöhe bzw. Schadensschätzung des Risikos bzw. der Unsicherheit eingetragen sind, so dass auf einfache Weise die Höhe der Maßnahmenkosten abgelesen werden kann.

In einer weiteren Ausführungsform der Erfindung besteht ferner die Möglichkeit, dass in dem Balkendiagramm durch einen Benutzer Marker zur Hervorhebung von Risiken und/oder Unsicherheiten gesetzt werden können. Auf diese Weise können die von einem Benutzer als besonders relevant erachteten Risiken bzw. Unsicherheiten auf einfache Weise hervorgehoben werden.

Neben dem oben beschriebenen Verfahren betrifft die Erfindung ferner ein Computerprogrammprodukt mit einem auf einem maschinenlesbaren Träger gespeicherten Programmcode zur Durchführung jeder beliebigen Variante des oben beschriebenen Verfahrens, wenn das Programm auf einem Rechner abläuft.

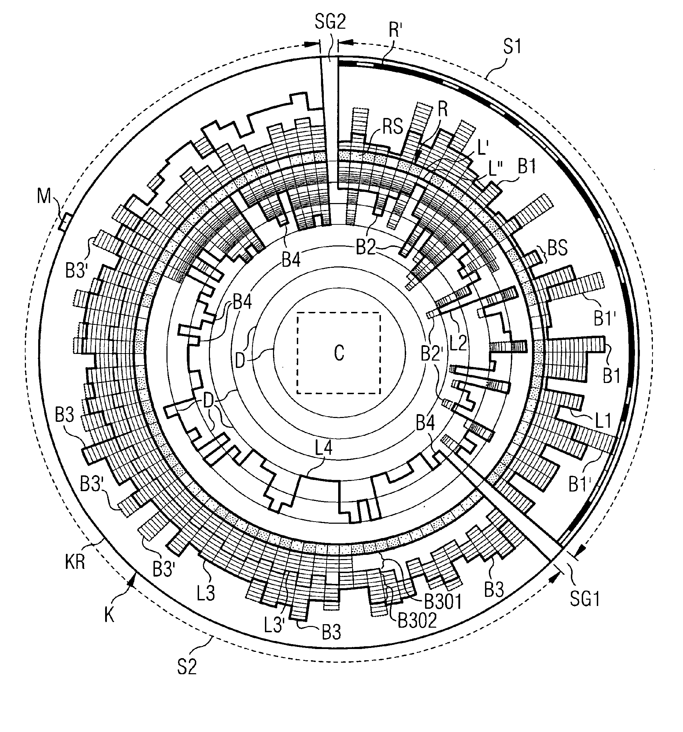

Ein Ausführungsbeispiel der Erfindung wird nachfolgend anhand der beigefügten Fig. 1 detailliert beschrieben.

Fig. 1 zeigt eine bevorzugte Ausgestaltung einer mit einer Ausführungsform des erfindungsgemäßen Verfahrens generierten Darstellung des Risikostatus eines Projekts.

Mit dem erfindungsgemäßen Verfahren kann in beliebigen Phasen in einem Projekt zur Entwicklung oder Herstellung eines technischen Systems oder technischer Komponenten bzw. eines technischen Prozesses die mit dem Projekt verbundenen Risiken bzw. Unsicherheiten geeignet visualisiert werden, so dass der Risikostatus einfach und intuitiv durch den Betrachter erfasst werden kann. Die Risiken und Unsicherheiten werden z.B. in einem frühen Stadium des Projekts ermittelt, um zu entscheiden, ob die Entwicklung bzw. Herstellung einer technischen Anlage basierend auf der Spezifikation eines potentiellen Kunden überhaupt gestartet werden soll. In diesem frühen Projektstadium werden die anfänglichen Risiken und Unsicherheiten geeignet abgeschätzt, wobei zunächst die Unsicherheiten, d.h. die nicht kalkulierbaren Risiken, überwiegen. Basierend auf einer entsprechenden Visualisierung, welche nachfolgend noch näher beschrieben wird, kann dann abgeschätzt werden, inwieweit mit dem potentiellen Kunden weitere technische Spezifikationen bzw. vertragliche Rahmenbedingungen abzuklären sind, um ein realistisches Bild von den auftretenden Risiken zu bekommen. Gegebenenfalls kann auch in diesem frühen Projektstadium bereits basierend auf der erfindungsgemäßen Visualisierung festgestellt werden, dass die Risiken und Unsicherheiten derart hoch sind, dass eine Weiterverfolgung des Projekts keinen Sinn macht.

Im Regelfall wird die erfindungsgemäße Visualisierung des Risikostatus bei Weiterverfolgung des Projekts kurz vor einer Angebotsabgabe an den Kunden nochmals vorgenommen, um sich Klarheit darüber zu verschaffen, ob die kalkulierbaren Risiken überwiegen und ob die Größe der Risiken und Unsicherheiten eine entsprechende Angebotsabgabe für sinnvoll erscheinen lassen. Gegebenenfalls wird bei zu hohen Risiken bzw. Unsicherheiten auf eine Angebotsabgabe verzichtet.

Sollte im Falle einer Angebotsabgabe das Projekt aufgrund der Annahme des Angebots durch den Kunden in die nächste Phase der eigentlichen Realisierung übergehen, kann während der Realisierung nochmals zu verschiedenen Zeitpunkten eine entsprechende Risikoabschätzung vorgenommen werden, wobei die Risiken und Unsicherheiten mit fortschreitendem Projektstatus immer weniger werden und die noch verbleibenden Risiken immer genauer kalkuliert werden können.

Fig. 1 zeigt eine bevorzugte Realisierung einer Visualisierung eines Projektstatus basierend auf einem kreisförmigen Balkendiagramm, welches durch geeignete technische Mittel, wie z.B. einem Bildschirm oder einem Beamer, einem Personenkreis präsentiert werden kann. Zur Generierung der gezeigten Darstellung werden erste Eingangsgrößen in der Form von mehreren Risiken berücksichtigt, welche vorab in geeigneter Weise durch am Projekt beteiligte Personen, gegebenenfalls in Workshops, spezifiziert wurden. Die Risiken sind dabei kalkulierbar und werden deshalb kalkulatorisch durch eine Eintrittswahrscheinlichkeit des entsprechenden Risikos in Prozent und ein Schadensmaß bei Eintritt des Risikos beschrieben. Das Schadensmaß wird vorzugsweise durch einen monetären Schaden charakterisiert. Die Risiken können beliebig ausgestaltet sein und hängen stark von dem Projekt ab. Ein Risiko könnte beispielsweise das Risiko des Ausfalls einer bestimmten Komponente eines zu realisierenden technischen Systems sein, wobei mit diesem Risiko ein entsprechender monetärer Schaden verbunden ist (z.B. die Kosten für den Ersatz der ausgefallenen Komponente) sowie eine entsprechende Wahrscheinlichkeit, dass dieser Schaden eintritt.

Neben den Risiken als erste Eingangsgrößen werden ferner auch Unsicherheiten im Projekt in Betracht gezogen, welche Aspekte des Projekts darstellen, für die noch nicht genug Informationen oder genug Erfahrung zur Verfügung stehen, um genaue Eintrittswahrscheinlichkeiten bzw. Schadenshöhen anzugeben. Um dennoch ein Maß für die Relevanz einer entsprechenden Unsicherheit zu erhalten, werden den Unsicherheiten jeweils eine Gewichtung und eine Schadensschätzung zugeordnet, welche wiederum durch am Projekt beteiligte Personen festgelegt werden. Die Schadensschätzung korrespondiert meist mit einem monetären Schaden, dessen Bezifferung jedoch wesentlich ungenauer als die Schadenshöhe für ein Risiko ist.

Zur Gewichtung einer entsprechenden Unsicherheit wird ein Beeinflussbarkeitsmaß der Unsicherheit und ein Vorhersagbarkeitsmaß der Unsicherheit betrachtet, welche wiederum durch am Projekt beteiligte Personen festgelegt werden. Entsprechenden Unsicherheiten mit ihrer Schadensschätzung und ihrer Gewichtung fließen dabei als zweite Eingangsgrößen in die Generierung des kreisförmigen Balkendiagramms der Fig. 1 ein.

Im Folgenden wird zunächst erläutert, wie die obigen Größen der Schadensschätzung, der Vorhersagbarkeit und der Beeinflussbarkeit zu verstehen sind bzw. von welchen Faktoren diese Größen abhängen. Die Schadensschätzung bildet eine analoge Größe zu der Schadenshöhe beim Risiko. Hohe Schadensschätzungen stellen somit ein hohes Gefährdungspotential für das Projekt dar, und zwar unabhängig davon, ob die Vorhersagbarkeit bzw. die Beeinflussbarkeit der entsprechenden Unsicherheit groß ist oder nicht. Vorzugsweise stellt die Schadensschätzung dabei eine qualitative Bewertung dahingehend dar, wie hoch der maximal mögliche Schaden sein kann.

Die Vorhersagbarkeit einer Unsicherheit gibt wieder, wie gut die Ursachen und Risikotreiber für die betrachtete Unsicherheit bekannt sind. Dabei wird die Erfahrung der Mitarbeiter in der das Projekt durchführenden Firma berücksichtigt. Sollten viele Erfahrungen aus ähnlichen Projekten vorliegen, ist die Vorhersagbarkeit der entsprechenden Unsicherheit hoch. Sollte die Unsicherheit für die das Projekt durchführende Firma zwar neu sein, jedoch Lösungen aus dem Stand der Technik zur Verhinderung bzw. Elimination der Unsicherheit bekannt sein, liegt die Vorhersagbarkeit auf mittlerem Niveau. Demgegenüber ist die Vorhersagbarkeit als niedrig einzustufen, wenn die Unsicherheit gänzlich als neu einzustufen ist.

Die Größe der Beeinflussbarkeit beschreibt, inwieweit die das Projekt durchführende Firma die der entsprechenden Unsicherheit zu Grunde liegende Thematik durch Maßnahmen beeinflussen kann. Trifft die Kompetenz für die Unsicherheit beispielsweise einen Zulieferer, auf den die das Projekt durchführende Firma keinen Zugriff hat, ist die Beeinflussbarkeit als sehr niedrig einzustufen. Hat die Firma die betrachtete Unsicherheit teilweise selbst in der Hand bzw. hat sie Zugriff auf einen Dritten, der die Unsicherheit beeinflussen kann, ist die Beeinflussbarkeit als mittel einzustufen. Ist die Unsicherheit komplett durch die das Projekt durchführende Firma beeinflussbar, ist die Beeinflussbarkeit als hoch einzustufen. Wie bereits erwähnt, werden die Unsicherheiten und auch die kalkulierten Risiken durch am Projekt beteiligte Personen geeignet bestimmt. Der Prozess der Festlegung der oben dargelegten einzelnen Größen ist dabei nicht Bestandteil des erfindungsgemäßen Verfahrens. Das Verfahren verwendet die entsprechenden Größen lediglich als Eingangsgrößen, um eine schnell erfassbare Visualisierung des Gesamtprojektrisikos zu realisieren.

Die auf den oben dargelegten Eingangsgrößen beruhende Darstellung gemäß Fig. 1 enthält eine Mehrzahl von Bezugszeichen sowie entsprechende Linien zur Zuweisung der Bezugszeichen zu Komponenten der Darstellung. Die Bezugszeichen und die entsprechenden Linien sind dabei nicht Bestandteil der Darstellung an sich.

Die Darstellung umfasst einen durch einen äußeren Rand KR begrenzten Kreis K, wobei die Fläche des Kreises den Hintergrund der Darstellung bildet, der in einer bevorzugten Ausführungsform schwarz gefärbt ist, um entsprechende Balken der Balkendarstellung, welche farbig heller gefärbt sind, besonders gut hervorzuheben. Der Kreis K ist in zwei Kreissektoren S1 und S2 unterteilt, welche über zwei Kreissegmente SG1 und SG2 voneinander getrennt sind. Diese Segmente visualisieren die Grenzen zwischen den beiden Sektoren und sind insbesondere in der gleichen Farbe wiedergegeben wie der Hintergrundfarbe des Kreises K. Der Sektor S1 dient zur Visualisierung der kalkulierbaren Risiken des Projekts und der Sektor S2 zur Visualisierung der Unsicherheiten. Man erkennt, dass in dem Szenario der Fig. 1 der Sektor S2 größer als der Sektor S1 ist, was darauf schließen lässt, dass ein Projektstatus in einem frühen Stadium des Projekts visualisiert ist, da die Anzahl an Unsicherheiten im Vergleich zu den kalkulierbaren Risiken sehr groß ist.

Im mittleren Bereich des Kreises K ist ferner ein Ring R vorgesehen, der durch eine innere äußere Linie L' und eine innere Linie L" begrenzt ist und lediglich durch die Segmente SG1 und SG2 unterbrochen wird. Entlang dieses Rings R sind für jedes Risiko und jede Unsicherheit ein Paar von Balken vorgesehen, wobei sich der eine Balken des Paars radial von dem Ring nach außen erstreckt und der andere Balken radial nach innen. Es wird auf diese Weise für jedes Risiko und jede Unsicherheit ein Balkensegment erzeugt, wobei die Umfangsausdehnung eines Balkensegments beispielhaft an einer Stelle in dem Diagramm mit BS bezeichnet ist. Entsprechend den Balkensegmenten erfolgt analog auch eine Unterteilung des Rings R in einzelne Ringsegmente, von denen eines in Fig. 1 beispielhaft mit Bezugszeichen RS bezeichnet ist.

Fig. 1 zeigt ein Projektstadium, bei dem zuvor schon einmal Maßnahmen geplant wurden. In dem Diagramm der Fig. 1 werden dabei sowohl die Risiken und Unsicherheiten nach Durchführung der geplanten Maßnahmen als auch vor Durchführung der geplanten Maßnahmen wiedergegeben, wobei die Risiken bzw. Unsicherheiten nach Maßnahmendurchführung deutlicher als vor der Maßnahmendurchführung hervorgehoben sind, wie weiter unten noch näher erläutert wird. Sofern kein Unterschied zwischen den durch die Balken dargstellten Größen vor und nach geplanten Maßnahmen besteht, wird nur der Balken nach Durchführung der geplanten Maßnahmen wiedergegeben.

In dem Sektor S1 betreffen die sich von dem Ring R radial nach außen erstreckenden Balken, deren Umrisse durch eine dicke durchgehende Linie L1 angedeutet sind und welche aus Übersichtlichkeitsgründen nur teilweise mit dem Bezugszeichen B1 versehen sind, die Eintrittswahrscheinlichkeit des entsprechenden Risikos nach Durchführung der geplanten Maßnahmen. Die Balken sind dabei in mittelblauer Farbe wiedergegeben und heben sich somit gut vom Hintergrund des Kreises K ab. Je höher ein Balken ist, desto größer ist die Eintrittswahrscheinlichkeit, wobei die Eintrittswahrscheinlichkeit basierend auf einer linearen Skala wiedergegeben ist, welche in den einzelnen Balken durch gleichmäßige Skalenabstände angedeutet ist.

Für manche der Balken sind auch Werte für Eintrittswahrscheinlichkeiten von Risiken vor der Durchführung der geplanten Maßnahmen erkennbar. Diese Eintrittswahrscheinlichkeiten sind im Regelfall höher als nach erfolgreicher Maßnahmendurchführung. In Fig. 1 wird die Differenz zwischen Eintrittswahrscheinlichkeit vor und nach Maßnahmenplanung durch einen dunkler gefärbten blauen Balken angedeutet, der auf dem Balken nach Durchführung der geplanten Maßnahmen aufgesetzt ist. In Fig. 1 sind die entsprechend aufgesetzten Balken durch punktierte Linien angedeutet und zumindest teilweise mit Bezugszeichen B1' versehen. Aufgrund der dunkleren Färbung der Balken B1' fallen die Risiken vor der Durchführung der geplanten Maßnahmen nicht so stark ins Auge wie die Risiken nach der Durchführung der geplanten Maßnahmen.

In dem Sektor S1 erstrecken sich in jedem Balkensegment BS auch entsprechende Balken für jedes Segment radial in das Innere des Kreises K. Diese Balken sind in Fig. 1 zumindest teilweise mit Bezugszeichen B2 bezeichnet, und deren Umriss ist durch eine dicke Linie L2 wiedergegeben. Die Balken B2 stellen dabei die Schadenshöhe des entsprechenden Risikos auf einer logarithmischen Skala dar, wobei die logarithmische Skala innerhalb der einzelnen Balken ersichtlich ist. Ferner sind die einzelnen Dekaden der logarithmischen Skala durch innere Ringe D angedeutet, welche sich von dem Hintergrund des Kreises K abheben. Im Gegensatz zu dem Balken B1 sind die Balken B2 in hellroter Farbe wiedergegeben und heben sich ebenfalls gut von dem Hintergrund des Kreises K ab. In Analogie zu den Eintrittswahrscheinlichkeiten werden auch für die Schadenshöhen die entsprechenden Werte vor Durchführung der geplanten Maßnahmen angegeben. Diese Schadenshöhen sind in der Regel höher als nach erfolgreicher Maßnahmendurchführung und die Differenz zwischen den Schadenshöhen vor und nach Maßnahmendurchführung wird wiederum durch entsprechende Balken visualisiert, welche auf den Balken B2 aufgesetzt sind. Diese aufgesetzten Balken sind in Fig. 1 wiederum gestrichelt angedeutet und zumindest teilweise mit Bezugszeichen B2' versehen. Die Balken B2' weisen dabei eine dunkelrote Farbe auf und heben sich wesentlich schlechter vom Hintergrund als die Balken B2 ab. Somit wird der Augenmerk der Fig. 1 stärker auf die Größen nach Durchführung der geplanten Maßnahmen gerichtet.

Der Sektor S2 betreffend die Unsicherheiten des Projekts ist analog zum Sektor S1 aufgebaut. Es ist wiederum für jede Unsicherheit ein entsprechendes Kreissegment vorgesehen, wobei nunmehr die sich vom Ring R nach außen erstreckenden Balken einer entsprechenden Gewichtung der jeweiligen Unsicherheit entsprechen. Diese Balken sind zum Teil mit Bezugszeichen B3 bezeichnet, wobei der Umriss dieser Balken durch eine entsprechende dicke Linie L3 angedeutet ist. Die Balken B3 zeigen die Gewichtung nach Durchführung der geplanten Maßnahmen. Analog zu dem Sektor S1 sind im Sektor S2 auch die entsprechenden Gewichtungen vor Durchführung der geplanten Maßnahmen durch auf die Balken B3 aufgesetzte Balken wiedergegeben, welche in Fig. 1 zum Teil mit Bezugszeichen B3' bezeichnet sind und durch gepunktete Umrandungen angedeutet sind. Die Farbe dieser aufgesetzten Balken ist dabei sehr dunkel und liegt im bräunlichen Bereich, so dass die Gewichtung vor Durchführung der geplanten Maßnahmen nicht sehr stark ins Auge fällt.

Die einzelnen Balken B3 setzen sich jeweils aus einem inneren Balkenabschnitt und einem äußeren Balkenabschnitt zusammen, wobei die Grenze zwischen den Balkenabschnitten in Fig. 1 mit einer Linie L3' angedeutet ist. Beispielhaft ist ein am Ring R anliegender Balkenabschnitt in Fig. 1 mit Bezugszeichen B301 und ein darauf aufgesetzter Balkenabschnitt mit Bezugszeichen B302 bezeichnet. Alle inneren Balkenabschnitte sind dabei in helloranger Farbe wiedergegeben und alle äußeren Balkenabschnitte in gelber Farbe, so dass sich diese Balkenabschnitte deutlich von dem Hintergrund des Kreises K abheben.

Die inneren Balkenabschnitte B301 betreffen das entsprechende Beeinflussbarkeitsmaß der jeweiligen Unsicherheit, wobei nicht das Beeinflussbarkeitsmaß an sich, sondern eine inverse Größe dieses Maßes als Balken wiedergegeben ist. Somit ist der Balken B301 umso höher, je größer die Unbeeinflussbarkeit, d.h. je geringer das Beeinflussbarkeitsmaß der entsprechenden Unsicherheit ist. Der äußere Balken B302 betrifft das Vorhersagbarkeitsmaß der jeweiligen Unsicherheit, wobei wiederum nicht das Vorhersagbarkeitsmaß an sich, sondern eine zu diesem Maß inverse Größe wiedergegeben ist. Das heißt, je größer der Balken B302 ist, desto größer ist die Unvorhersagbarkeit der entsprechenden Unsicherheit. Durch die Wiedergabe geeigneter inverser Größen zum Vorhersagbarkeitsmaß und zum Beeinflussbarkeitsmaß wird eine Größe geschaffen, welche die Relevanz der Unsicherheit in der Form einer Gewichtung wiedergibt und somit einen Vergleich mit entsprechenden Eintrittswahrscheinlichkeiten von Risiken in dem Segment S1 ermöglicht.

In dem Beispiel der Fig. 1 bedeutet eine Balkenhöhe von 0 für die Unbeeinflussbarkeit ein maximales Beeinflussbarkeitsmaß von 2, wobei das Beeinflussbarkeitsmaß in Schritten von 0,5 zwischen 0 und 2 eingestuft wird. Demgegenüber bedeutet eine Balkenhöhe von 0 für die Unvorhersagbarkeit ein maximales Vorhersagbarkeitsmaß von 2, welches ebenfalls zwischen 0 und 2 in 0,5-Schritten festgelegt wird. Die durch die Balken B302 dargestellte Unvorhersagbarkeit wird dabei wiedergegeben als (2 - Vorhersagbarkeitsmaß), wohingegen die durch die Balken B301 wiedergegebene Unbeeinflussbarkeit dargestellt wird als (2 - Beeinflussbarkeitsmaß). Es sind auch beliebige andere entsprechende Codierungen von Unvorhersagbarkeit und Unbeeinflussbarkeit möglich, entscheidend ist lediglich, dass der Balken umso höher ist, je unbeeinflussbarer und je unvorhersagbarer die entsprechende Unsicherheit ist.

Neben den sich radial nach außen erstreckenden Balken B3 umfasst der Sektor S2 ferner sich ausgehend von dem Ring R nach innen erstreckende Balken, welche die entsprechende Schadensschätzung der entsprechenden Unsicherheit repräsentieren. Die einzelnen Schadensschätzungen sind dabei durch dunkelorange gefärbte Balken B4 wiedergegeben, deren Umriss durch die dicke Linie L4 angedeutet ist. Es sind dabei wiederum die Schadensschätzungen nach Durchführung der geplanten Maßnahmen wiedergegeben. Es kann dabei auch durch entsprechend aufgesetzte Balken die Schadensschätzung vor Durchführung der geplanten Maßnahmen wiedergegeben sein, wobei in dem Beispiel der Fig. 1 keine aufgesetzten Balken gezeigt sind, was bedeutet, dass die Schadensschätzungen vor und nach Durchführung der Maßnahmen immer gleich hoch sind. Die aufgesetzten Balken werden dabei in einer dunkleren Farbe als die Balken B4 dargestellt (z.B. in violett), so dass sie weniger stark als die Balken B4 auffallen.

In dem Beispiel der Fig. 1 ist innerhalb der Balken B4 wiederum eine entsprechende logarithmische Skala visualisiert, wobei jedoch die Höhe der Balken nicht basierend auf dieser Skala angezeigt wird, sondern in linearer Art und Weise basierend auf entsprechenden Werten der Schadensschätzung, welche zwischen 1 und 3 in Intervallen von 0,5 liegen. Durch die Balken B4 wird eine Vergleichbarkeit der Schadensschätzungen mit den entsprechenden Schadenshöhen der Risiken im Sektor S1 erreicht, da sich die jeweiligen Balken in beiden Sektoren S1 und S2 radial nach innen hin zum Zentrum des Kreises K erstrecken.

Wie oben dargelegt, sind in dem kreisförmigen Balkendiagramm der Fig. 1 entsprechende Parameter der Risiken und Unsicherheiten (d.h. die Eintrittswahrscheinlichkeit, die Gewichtung, das Schadensmaß und die Schadensschätzung) vor und nach der Durchführung von geplanten Maßnahmen wiedergegeben. Sollte der entsprechende Parameter vor der Maßnahmendurchführung größer sein, wird dies durch entsprechend aufgesetzte Balken wiedergegeben. Sollte sich der Parameter vor und nach der Durchführung der geplanten Maßnahme nicht verändert haben, wird kein aufgesetzter Balken wiedergegeben.

Sollte der relativ seltene Fall auftreten, dass nach der Durchführung der geplanten Maßnahmen ein Parameter höher als vor der Durchführung der geplanten Maßnahmen ist, wird dies dadurch angezeigt, dass die Farbgebung des entsprechenden Balkens vertauscht wird. Das heißt, ein entsprechend aufgesetzter Balken repräsentiert nunmehr das Anwachsen des Parameters zwischen dem Zeitpunkt vor Durchführung der Maßnahmen und nach Durchführung der Maßnahmen. Dabei wird als Farbe für den aufgesetzten Balken nunmehr die Farbe für den Balken zum Zeitpunkt nach der Durchführung der Maßnahmen verwendet. Demgegenüber zeigt nunmehr der Balken, auf dem der Balken aufgesetzt ist, die Höhe des Parameters vor der Durchführung der Maßnahmen an und weist auch die Farbe für Balken vor der Durchführung der Maßnahmen auf. Demzufolge kann durch eine Vertauschung der Farben zwischen dem sich unmittelbar an dem Ring R anschließenden Balken und dem darauf aufgesetzten Balken visualisiert werden, dass - im Unterschied zum Normalfall - die Parameter nach Durchführung der Maßnahmen höher sind als vor Durchführung der Maßnahmen.

In dem Beispiel der Fig. 1 ist es ferner auch möglich, dass entsprechende Kosten für eine Maßnahme zur Verminderung eines entsprechenden Risikos bzw. einer entsprechenden Unsicherheit angezeigt werden. Dies erfolgt durch einen (nicht gezeigten) weiß gefärbten Marker innerhalb des jeweiligen Balkensegments des betrachteten Risikos bzw. der betrachteten Unsicherheit, und zwar im Bereich der sich vom Ring nach innen erstreckenden logarithmischen Skala, wobei die Position des Markers auf der Skala die entsprechenden Maßnahmenkosten wiedergibt.

In dem Beispiel der Fig. 1 sind innerhalb der einzelnen Segmente RS des Rings R für das jeweilige betrachtete Risiko bzw. die jeweilige betrachtete Unsicherheit ferner entsprechende qualitative Bewertungen durch geeignete Grauabstufungen der Flächen der Ringsegmente RS wiedergegeben. Diese Grauabstufungen werden durch entsprechende Bepunktungen in den Segmenten angedeutet. Dabei wird z.B. auf einer Skala von 0 bis 5 in Schritten von 0,5 das Risiko bzw. die Unsicherheit bewertet, wobei das Risiko bzw. die Unsicherheit als umso relevanter und beachtenswerter eingestuft wird, je dunkler die Grauabstufung ist. Die Graustufe kann sich dabei zwischen weiß für eine sehr geringe Bewertung bis dunkelschwarz für eine sehr hohe Bewertung mit dazwischen liegenden Graustufen erstrecken.

In dem Beispiel der Fig. 1 ist in dem Segment S1 ferner ein äußerer Ring R' wiedergegeben, der benachbart zum Kreisrand KR des Kreises K liegt. Dieser Ring ist wiederum in einzelne Segmente für die einzelnen Risiken eingeteilt, wobei die einzelnen Segmente farbcodiert sind und über entsprechende Farben eine Kategorisierung des Risikos basierend auf der Eintrittswahrscheinlichkeit und Schadenshöhe des Risikos wiedergeben. Insbesondere beruht die Farbgebung auf einem quantitativen Risikowert, der sich aus dem Produkt aus Eintrittswahrscheinlichkeit und Schadenshöhe zusammensetzt. Dieser Risikowert ist für verschiedene Wertebereiche in die Kategorien "kleines Risiko", "mittleres Risiko" und "hohes Risiko" eingeteilt, wobei die entsprechende Risikokategorie durch Farben in den Segmenten des Außenrings R' wiedergegeben wird. Insbesondere bedeutet dabei eine rote Farbe ein hohes Risiko, eine gelbe Farbe ein mittleres Risiko und eine grüne Farbe ein geringes Risiko an. Aus Übersichtlichkeitsgründen ist in Fig. 1 die Farbgebung lediglich durch schwarze und weiße Segmente innerhalb des äußeren Rings R' visualisiert.

In der Darstellung der Fig. 1 besteht ferner die Möglichkeit, dass der Benutzer durch entsprechende Interaktion über eine Benutzerschnittstelle in der Darstellung Marker in der Form von farbigen Balken an entsprechende Balkensegmente setzt, deren Unsicherheiten bzw. Risiken nach seiner Ansicht hohe Bedeutung für das Projekt haben. In Fig. 1 ist beispielhaft ein solcher gesetzter Marker mit Bezugszeichen M wiedergegeben.

Im Zentrum des kreisförmigen Balkendiagramms, welches durch das Bezugszeichen C und ein entsprechendes gestricheltes Rechteck angedeutet ist, können ferner entsprechende Informationen zu dem Projekt, insbesondere der Projektname, die Anzahl der Risiken, die Anzahl der Unsicherheiten und weitere relevante Parameter für das Projekt angezeigt werden. Diese Daten können dabei gegebenenfalls aus einer entsprechenden Tabelle analog zu den Eingangsgrößen für Risiko und Unsicherheit ausgelesen und in heller Farbe zur Abhebung gegenüber dem dunklen Hintergrund des Kreises K wiedergegeben werden.

Durch die Darstellung von Risiken und Unsicherheiten nach Art einer Iris gemäß der Ausführungsform der Fig. 1 wird dem Betrachter einfach und intuitiv vermittelt, wie risikobehaftet das betrachtete Projekt im aktuellen Projektstadium ist. Insbesondere wird durch die unterschiedliche Farbgebungen der einzelnen Balken schnell visualisiert, wie sich im Projekt die Risiken gegenüber den Unsicherheiten aufteilen. Darüber hinaus wird durch die Größe der Balken visualisiert, wie groß die Unsicherheiten bzw. die Risiken sind. Es wird insbesondere vermittelt, dass ein umso farbiger und stärker gefüllter Kreis K für einen umso höheren Risikostatus des Projekts steht.

Mit der Darstellung der Fig. 1 ist ferner schnell erkennbar, welche Risiken bzw. Unsicherheiten besonders relevant sind, da für solche Risiken bzw. Unsicherheiten die entsprechend sich nach innen und außen erstreckenden Balken besonders lang sind. Darüber hinaus wird durch den mittleren Ring R auch eine qualitative Bewertung der Risiken visualisiert, welche mit den entsprechenden quantitativen Bewertungen basierend auf den Balken verglichen werden kann. Hierdurch wird auf einfache Weise ersichtlich, inwieweit eine Plausibilität des entsprechenden Risikos bzw. der entsprechenden Unsicherheit dahingehend besteht, dass die qualitative Bewertung, welche oftmals nur auf einem subjektiven Gefühl von entsprechend am Projekt beteiligten Personen basiert, mit einer quantitativen Bewertung des Risikos bzw. der Unsicherheit korreliert.

Darüber hinaus wird für jedes Risiko bzw. für jede Unsicherheit sofort das Profil des Risikos bzw. der Unsicherheit ersichtlich, da die entsprechenden Parameter des Risikos (d.h. der Schadenshöhe und die Eintrittswahrscheinlichkeit) bzw. die entsprechenden Parameter der Unsicherheit (d.h. die Unbeeinflussbarkeit, die Unvorhersagbarkeit und die Schadensschätzung) erkennbar sind.

## Patentansprüche

1. Verfahren zur rechnergestützten Visualisierung des Risikostatus in einem technischen Projekt zur Entwicklung oder Herstellung eines technischen Systems oder technischer Komponenten oder eines technischen Prozesses, bei dem:
- als erste Eingangsgrößen eine Anzahl von Risiken und/oder als zweite Eingangsgrößen eine Anzahl von Unsicherheiten bereitgestellt werden, wobei jedem Risiko eine Eintrittswahrscheinlichkeit und ein Schadensmaß bei Eintritt des Risikos zugeordnet ist und jeder Unsicherheit eine Gewichtung und eine Schadensschätzung bei Eintritt der Unsicherheit zugeordnet ist;
- basierend auf den ersten und/oder zweiten Eingangsgrößen ein Balkendiagram mit einem ersten Sektor (S1) für die ersten Eingangsgrößen und/oder einem zweiten Sektor (S2) für die zweiten Eingangsgrößen generiert wird, wobei der erste und zweite Sektor (S1, S2) visuell unterscheidbar sind;
- der erste Sektor (S1) für jedes Risiko der Anzahl von Risiken ein Balkensegment (BS) umfasst, in dem mittels Balken (B1, B2) die Größe der Eintrittswahrscheinlichkeit und die Größe des Schadensmaßes des jeweiligen Risikos visuell unterscheidbar wiedergegeben sind;
- der zweite Sektor (S2) für jede Unsicherheit der Anzahl von Unsicherheiten ein Balkensegment (BS) umfasst, in dem mittels Balken (B3, B4) die Größe der Gewichtung und die Größe der Schadensschätzung visuell unterscheidbar wiedergegeben sind.

2. Verfahren nach Anspruch 1, bei dem die Gewichtung einer jeweiligen Unsicherheit basierend auf einem Vorhersagbarkeitsmaß und einem Beeinflussbarkeitsmaß ermittelt wird, wobei sich die Gewichtung zusammensetzt aus einer Unvorhersagbarkeit, welche eine zum Vorhersagbarkeitsmaß inverse Größe ist, und einer Unbeeinflussbarkeit, welche eine zum Beeinflussbarkeitsmaß inverse Größe ist.

3. Verfahren nach Anspruch 2, bei dem die Gewichtung einer jeweiligen Unsicherheit in dem entsprechenden Balkensegment (BS) durch einen Balken (B3) repräsentiert wird, der sich aus einem Balkenabschnitt (B301) für die Unbeeinflussbarkeit und einem Balkenabschnitt (B302) für die Unvorhersagbarkeit zusammensetzt, wobei die beiden Balkenabschnitte (B301, B302) vorzugsweise visuell unterscheidbar sind.

4. Verfahren nach einem der vorhergehenden Ansprüche, bei dem in einem Balkensegment (BS) eines jeweiligen Risikos ein Balken (B1) in eine erste Richtung die Eintrittswahrscheinlichkeit repräsentiert und ein Balken (B2) in eine zweite, entgegen gesetzte Richtung die Schadenshöhe repräsentiert.

5. Verfahren nach einem der vorhergehenden Ansprüche, bei dem in einem Balkensegment (BS) einer jeweiligen Unsicherheit ein Balken (B3) in eine erste Richtung die Gewichtung repräsentiert und ein Balken in eine zweite, entgegen gesetzte Richtung die Schadensschätzung (B4) repräsentiert.

6. Verfahren nach einem der vorhergehenden Ansprüche, bei dem in dem Balkendiagramm
- solche Balken (B1), welche Eintrittswahrscheinlichkeiten repräsentieren, eine erste Farbe aufweisen;
- solche Balken (B2), welche Schadenshöhen repräsentieren, eine zweite Farbe aufweisen;
- solche Balken (B3), welche Gewichtungen repräsentieren, eine dritte Farbe oder ein Paar von Farben umfassend eine vierte und fünfte Farbe aufweisen;
- wobei die erste bis dritte Farbe oder die erste bis fünfte Farbe unterschiedliche Farben sind.

7. Verfahren nach Anspruch 6 in Kombination mit Anspruch 3, bei dem der Balkenabschnitt (B301) für die Unbeeinflussbarkeit die vierte Farbe und der Balkenabschnitt (B302) für die Unvorhersagbarkeit die fünfte Farbe aufweist.

8. Verfahren nach einem der vorhergehenden Ansprüche, bei dem das Balkendiagramm ein kreisförmiges Diagramm ist, wobei der erste Sektor (S1) ein erster Kreissektor und/oder der zweite Sektor (S2) ein zweiter Kreissektor ist und für jedes Risiko und/oder jede Unsicherheit ein Balkensegment (BS) in der Form eines Balkenkreissegments vorgesehen ist.

9. Verfahren nach Anspruch 8, bei dem der erste und zweite Kreissektor (S1, S2) durch zwei Trennkreissegmente (SG1, SG2) voneinander separiert sind.

10. Verfahren nach Anspruch 8 oder 9, bei dem das kreisförmige Diagramm einen visuell von den Balken (B1, B2, B3, B4) unterscheidbaren Ring (R) umfasst, der in jeweilige, den Balkenkreissegmenten (BS) zugeordnete Ringsegmente (RS) unterteilt ist.

11. Verfahren nach Anspruch 10, bei dem für ein jeweiliges Ringsegment (RS), welches einem ein Risiko repräsentierenden Balkenkreissegment (BS) zugeordnet ist, ein Balken (B1) für die Eintrittswahrscheinlichkeit und ein Balken (B2) für das Schadensmaß vorgesehen ist, wobei sich ausgehend von dem jeweiligen Ringsegment (RS) ein Balken in radialer Richtung des kreisförmigen Diagramms nach außen und der andere Balken in radialer Richtung des kreisförmigen Diagramms nach innen erstreckt.

12. Verfahren nach Anspruch 10 oder 11, bei dem für ein jeweiliges Ringsegment (RS), welches einem eine Unsicherheit repräsentierenden Balkenkreissegment (BS) zugeordnet ist, ein Balken (B3) für die Gewichtung und ein Balken (B4) für die Schadensschätzung vorgesehen ist, wobei sich ausgehend von dem jeweiligen Ringsegment (RS) ein Balken in radialer Richtung des kreisförmigen Diagramms nach außen und der andere Balken in radialer Richtung des kreisförmigen Diagramms nach innen erstreckt.

13. Verfahren nach einem der Ansprüche 10 bis 12, bei dem in einem jeweiligen Ringsegment (RS) eine Bewertung des dem Ringsegment (RS) zugeordneten Risikos oder der dem Ringsegment (RS) zugeordneten Unsicherheit visuell wiedergegeben ist.

14. Verfahren nach Anspruch 13, bei dem die visuelle Wiedergabe der Bewertung durch Grauabstufungen und/oder farbliche Abstufungen der Fläche des Ringsegments (RS) erfolgt.

15. Verfahren nach Anspruch 13 oder 14, bei dem die Bewertungen qualitative Bewertungen der Risiken und/oder der Unsicherheiten sind.

16. Verfahren nach einem der Ansprüche 8 bis 15, bei dem das kreisförmige Diagramm für den ersten und/oder zweiten Kreissektor (S1, S2) einen Außenring (R') mit jeweiligen, den Balkenkreissegmenten (BS) zugeordneten Außenringsegmenten umfasst, wobei in den jeweiligen Außenringsegmenten eine quantitative Bewertung des Risikos oder der Unsicherheit basierend auf den Balken (B1, B2, B3, B4) des entsprechenden Balkenkreissegments (BS) visualisiert ist, wobei die quantitative Bewertung vorzugsweise in mehrere Klassen eingeteilt ist und die jeweilige Klasse der Bewertung vorzugweise durch die Farbe des jeweiligen Außenringsegments wiedergegeben ist.

17. Verfahren nach einem der Ansprüche 8 bis 16, bei dem der Hintergrund des kreisförmigen Diagramms dunkel und insbesondere schwarz ist und sich die Balken (B1, B2, B3, B4) von diesem Hintergrund durch ihre Farbgebung abheben.

18. Verfahren nach einem der Ansprüche 8 bis 17, wobei im Zentrum (C) des kreisförmigen Diagramms Information zu dem technischen Projekt wiedergegeben sind.

19. Verfahren nach einem der vorhergehenden Ansprüche, bei dem in den Balken (B1, B2, B3, B4) des Balkendiagramms eine Skala, insbesondere in der Form von umlaufenden Kreislinien (D), visualisiert ist.

20. Verfahren nach Anspruch 19, bei dem in Balken (B2, B4), welche Schadensmaße oder Schadensschätzungen repräsentieren, eine logarithmische Skala visualisiert ist und in Balken (B1, B3), welche Eintrittwahrscheinlichkeiten oder Gewichtungen repräsentieren, eine lineare Skala visualisiert ist.

21. Verfahren nach einem der vorhergehenden Ansprüche, bei dem der Risikostatus nach einer Planung von Maßnahmen zur Verminderung des Projektrisikos in dem Balkendiagramm visualisiert ist, wobei die Risiken und/oder Unsicherheiten nach einer Durchführung der geplanten Maßnahmen durch jeweilige Balken (B1, B2, B3, B4) visualisiert sind.

22. Verfahren nach Anspruch 21, bei dem in dem Balkendiagramm ferner zumindest teilweise die Risiken und/oder Unsicherheiten vor der Durchführung der geplanten Maßnahmen visualisiert sind.

23. Verfahren nach Anspruch 22, bei dem die jeweiligen Balken (B1, B2, B3, B4) mit zweiten Balken (B1', B2', B3') überlagert werden, welche jeweils die durch den jeweiligen Balken (B1, B2, B3, B4) repräsentierte Größe vor der Durchführung der geplanten Maßnahmen wiedergeben, wobei von einem jeweiligen zweiten Balken (B1', B2', B3') der über den jeweiligen Balken hinausgehende Teil visuell unterscheidbar von dem jeweiligen Balken (B1, B2, B3, B4) wiedergegeben ist.

24. Verfahren nach Anspruch 23, bei dem im Falle, dass der jeweilige zweite Balken (B1', B2', B3') niedriger als der jeweilige Balken (B1, B2, B3, B4) ist, die visuellen Darstellungen der beiden Balken miteinander vertauscht werden.

25. Verfahren nach einem der Ansprüche 21 bis 24, bei dem in dem Balkendiagramm die Maßnahmenkosten der geplanten Maßnahmen visualisiert sind.

26. Verfahren nach einem der vorhergehenden Ansprüche, bei dem in dem Balkendiagramm durch einen Benutzer Marker (M) zur Hervorhebung von Risiken und/oder Unsicherheiten gesetzt werden können.

27. Computerprogrammprodukt mit einem auf einem maschinenlesbaren Träger gespeicherten Programmcode zur Durchführung eines Verfahrens nach einem der vorhergehenden Ansprüche, wenn das Programm auf einem Rechner abläuft.
